# EUROPÄISCHE PATENTANMELDUNG

(11) **EP 3 388 539 A1**
(43) Veröffentlichungstag der Anmeldung: **17.10.2018**
(21) Anmeldenummer: 17165926.1
(22) Anmeldetag: 11.04.2017
(51) Int. Cl.: C22B 9/02, B01D 3/10, C22B 9/04, C22B 26/22, F27B 5/04

(54) **VORRICHTUNG UND VERFAHREN ZUR ERZEUGUNG VON GEREINIGTEM, INSBESONDERE HOCHREINEM, MAGNESIUM**

(71) Anmelder: Biotronik AG, 8180 Bülach (CH)
(72) Erfinder: Windler, Markus, 8354 Hofstetten (CH); Eutin, Thomas, 23996 Gallentin (DE)
(74) Vertreter: Galander, Marcus

(57) **Zusammenfassung**

Die Erfindung betrifft eine Vorrichtung (100) zur Erzeugung von gereinigtem, insbesondere hochreinem, Magnesium (26), aufweisend
- einen Reaktor (8) zur Vakuumdestillation, der entlang einer Längsachse (L) erstreckt ist, wobei der Reaktor (8) einen Reaktorinnenraum (28) mit einem Erwärmungsbereich (29) zum Erwärmen von in dem Erwärmungsbereich (29) zur Verfügung gestelltem Magnesium (20) bildet,
- einen Tiegel (10), der einen Tiegelinnenraum (39) zur Aufnahme von mittels der Vorrichtung (100) verdampftem und anschließend kondensiertem gereinigtem Magnesium (26) bildet,
wobei der Reaktor (8) an dem Erwärmungsbereich (29) einen radial umlaufenden Vorsprung (31) aufweist, wobei eine im Wesentlichen quer zur Längsachse (L) erstreckte Kontaktfläche (32) des Vorsprungs (31) dazu ausgebildet ist, mit einem den Tiegelinnenraum (39) begrenzenden Rand (40) des Tiegels (10) eine im Wesentlichen dichtende Verbindung zu bilden.

Weiterhin betrifft die Erfindung ein Verfahren zur Erzeugung von gereinigtem, insbesondere hochreinem, Magnesium (26) mittels der Vorrichtung.

## Beschreibung

Die Erfindung betrifft eine Vorrichtung und ein Verfahren zur Erzeugung von gereinigtem, insbesondere hochreinem, Magnesium. Insbesondere beschäftigt sich die vorliegende Erfindung mit einer Anlage und einem Prozessablauf zur thermischen Reinigung von Magnesium mittels Vakuumdestillation.

Aus dem Stand der Technik ist ein Verfahren bekannt, bei dem in einem Reaktor Magnesium in einem Erwärmungsbereich (heißere Zone) verflüssigt und verdampft und in einem Kondensationsbereich (kühlere Zone) zu einer hochreinen Metallschmelze kondensiert wird. Nach der Erstarrung bildet dieses Magnesium einen massiven Block, welcher z.B. als Rohmaterial für eine Legierung, beispielsweise in medizintechnischen Erzeugnissen, eingesetzt werden kann.

Weiterhin ist aus dem Dokument WO 2013/107644 A1 eine spezialisierte Vakuumdestillationseinrichtung zur Durchführung des besagten Verfahrens bekannt. Diese besteht aus einem Reaktor mit einem oberen Bereich zur Aufnahme des zu reinigenden Ausgangsstoffes (z.B. technisch reines Magnesium) und einem unteren Bereich, in den ein Tiegel, z.B. aus Grafit, zur Aufnahme des kondensierten gereinigten Magnesiums eingebracht wird.

Derartige Vorrichtungen des Standes der Technik haben unter anderem den Nachteil, dass ein relativ hoher Aufwand zum Einbringen und Entnehmen des Tiegels aus dem Reaktor sowie zur Reinigung und zur Wartung des Reaktors und des Tiegels notwendig ist.

Es ist somit die Aufgabe der vorliegenden Erfindung, eine Vorrichtung und ein Verfahren zur Erzeugung von gereinigtem Magnesium zur Verfügung zu stellen, welche bzw. welches hinsichtlich der beschriebenen Nachteile des Standes der Technik verbessert ist.

Diese Aufgabe wird durch die Vorrichtung zur Erzeugung von gereinigtem Magnesium nach Anspruch 1 und das Verfahren zur Erzeugung von gereinigtem Magnesium nach Anspruch 12 gelöst. Ausgestaltungen der Vorrichtung sind in den Unteransprüchen 2 bis 11 angegeben und Ausgestaltungen des Verfahrens sind in den Unteransprüchen 13 bis 15 angegeben. Diese und weitere Ausgestaltungen werden im Folgenden beschrieben.

Ein erster Aspekt der Erfindung betrifft eine Vorrichtung zur Erzeugung von gereinigtem, insbesondere hochreinem, Magnesium, aufweisend
- einen Reaktor zur Vakuumdestillation, der entlang einer Längsachse erstreckt ist, wobei der Reaktor einen Reaktorinnenraum mit einem Erwärmungsbereich zum Erwärmen von in dem Erwärmungsbereich zur Verfügung gestelltem Magnesium bildet,
- einen Tiegel, das heißt ein topfartiges Behältnis, wobei der Tiegel einen Tiegelinnenraum zur Aufnahme von mittels der Vorrichtung verdampftem und anschließend kondensiertem gereinigtem Magnesium bildet,
wobei der Reaktor an dem Erwärmungsbereich einen in Bezug zur Längsachse radial umlaufenden Vorsprung aufweist, wobei eine im Wesentlichen quer zur Längsachse erstreckte Kontaktfläche des Vorsprungs dazu ausgebildet ist, mit einem den Tiegelinnenraum begrenzenden Rand des Tiegels eine im Wesentlichen dichtende Verbindung zu bilden. Hierbei ist unter dem Rand des Tiegels eine axial die Öffnung des Tiegels begrenzende Kante oder Fläche zu verstehen. Das bedeutet, dass die Verbindung zwischen der Kontaktfläche des Vorsprungs und dem Rand des Tiegels nicht vollständig vakuumdicht bzw. dampfdicht ist, sondern trotz Anlage des Randes des Tiegels an der Kontaktfläche ein gewisser Gasaustausch über die Verbindung stattfindet. Ein geeignetes Tiegelmaterial, das eine solche im Wesentlichen dichtende Verbindung bei den hohen Temperaturen des Destillationsprozesses ermöglicht, ist z.B. Grafit, welches eine offene Porosität von 10 Vol.% (nach DIN 66133) und einen mittleren Poreneintrittsdurchmesser von 1,8 µm (nach DIN 66133) aufweist. Bei Verwendung eines solchen Materials können z.B. etwa 2 % bis 4 % des Einwaagegewichts des Magnesiums während einer Destillation als Dampf über die im Wesentlichen dichtende Verbindung aus dem Tiegelinnenraum entweichen. Im "Wesentlichen dichtend" wird im Rahmen der Anmeldung daher so verstanden, dass ein mechanischer, spaltfreier Kontakt zwischen der Kontaktfläche des Vorsprungs und dem Rand des Tiegels besteht, wobei auf die Kontaktfläche des Vorsprungs und Tiegelrand eine Kraft größer Null derart wirkt, dass beide Flächen zusammen gepresst werden. Diese Kraft kann auch sehr klein sein, entscheidend ist das Zusammenpressen.

Dies hat den Vorteil, dass durch die Verbindung zwischen dem Rand des Tiegels und der Kontaktfläche der weitaus überwiegende Anteile des gasförmige Magnesiums daran gehindert wird, in den Zwischenraum zwischen dem Tiegel und der Reaktorwandung des Kondensationsbereiches einzudringen. Dadurch wird insbesondere die Menge des sich an der Wandung des Reaktors und an der Außenwand des Tiegels absetzenden Magnesiums vermindert und der Tiegel kann infolgedessen nach Abschluss des Verfahrens einfacher aus dem Reaktor entfernt werden.

Beim bestimmungsgemäßen Gebrauch der Vorrichtung ist der Reaktor insbesondere derart angeordnet, dass die Längsachse vertikal verläuft.

Der besagte Reaktor kann z.B. zylinderförmig ausgebildet sein, wobei die besagte Längsachse, entlang der der Reaktor erstreckt ist, die Zylinderachse bildet.

Es versteht sich, dass der Reaktor aus verschiedenen geeigneten Materialien gebildet sein kann, beispielsweise aus einem Metall oder einer Legierung, z.B. Edelstahl.

Wie bereits beschrieben ist der besagte Vorsprung am Erwärmungsbereich des Reaktors radial umlaufend ausgebildet. Das heißt, der Vorsprung ist in Umfangsrichtung des Reaktors durchgängig ausgebildet. Weiterhin kann der Vorsprung z.B. in den Reaktorinnenraum hineinragen und/ oder z.B. durch eine Verjüngung oder Einfaltung der Reaktorwandung oder durch ein mit der Reaktorinnenwand mechanisch verbundenes separates Bauteil gebildet werden.

Um erneute Verunreinigungen des erhaltenen gereinigten Magnesiums zu vermeiden, empfiehlt es sich, dass der besagte Tiegel aus einem Material gebildet ist, das chemisch inert gegenüber Magnesium ist. Insbesondere ist der Tiegel aus Grafit, bevorzugt rochreinem Grafit mit einem Aschegehalt von weniger als 100 ppm, weiter bevorzugt weniger als 20 ppm, gebildet. Solche Grafitmaterialien können insbesondere isostatisch gepresst und für Stranggussverfahren geeignet sein. Dabei kann das Grafitmaterial z.B. eine mittlere Korngröße von 10 µm (nach ISO 13320), eine Dichte von 1,83 g/cm³ (nach DIN IEC 60413/204), eine offene Porosität von 10 Vol.% (nach DIN 66133), einen mittleren Poreneintrittsdurchmesser von 1,8 µm (nach DIN 66133), einen Permeabilitätskoeffizient (bei Raumtemperatur) von 0,06 cm²/s (nach DIN 51935), eine Rockwell Härte HR_{5/100} von 90 (nach DIN IEC 60413/303), eine Biegefestigkeit von 60 mPa (nach DIN IEC 60413/501), eine Druckfestigkeit von 130 MPa (nach DIN 51910), eine Wärmeausdehnung (20°C bis 200°C) von 4,2x10⁻⁶ K⁻¹, eine Wärmeleitfähigkeit (bei 20 °C) von 105 Wm⁻¹K⁻¹ (nach DIN 51908) und einen Aschewert von 20 ppm (nach DIN 51903) aufweisen.

Weiterhin kann die Vorrichtung eine Heizeinrichtung zur Erwärmung des Reaktorinnenraums, insbesondere des Erwärmungsbereiches aufweisen. Die Heizeinrichtung kann einen Teil des Reaktors bilden oder separat von dem Reaktor ausgeführt sein, z.B. in Form eines Haubenofens, der beim Betrieb des Reaktors zumindest teilweise über dem Reaktor angeordnet wird.

Die Vorrichtung zur Erzeugung von gereinigtem Magnesium kann außerdem eine Einrichtung zur Erzeugung eines Vakuums, d.h. eines Unterdrucks im Vergleich zum Atmosphärendruck, in dem Reaktorinnenraum aufweisen. Dabei ist der Reaktorinnenraum insbesondere vakuumdicht gegen die Umgebung des Reaktors verschließbar. Das Vakuum ist notwendig, um das Magnesium vor Oxidation zu schützen und eine Verlangsamung des Destillationsprozesses durch störende Gase zu verhindern.

Gemäß einer Ausführungsform weist die Vorrichtung eine konisch ausgestaltete Führung zur Zentrierung des Tiegels in Bezug zur Längsachse bei einer Bewegung des Tiegels entlang der Längsachse auf, wobei die Führung an einem Rand des Tiegels und/ oder in einem einen Rand des Tiegels zumindest teilweise umgebenden Führungsbereich des Reaktors ausgebildet ist. Dabei kann die konische Führung am Tiegel an einem äußeren Rand des Tiegels oder an einem inneren Rand des Tiegels ausgeführt sein.

Dies hat den Vorteil, dass der Tiegel beim Einbringen in den Reaktorinnenraum bzw. beim Bewegen in dem Reaktorinnenraum in eine zentrale Position geführt wird, so dass der Tiegelrand gleichmäßig an der Kontaktfläche des Vorsprungs anliegt. Dies verbessert die im Wesentlichen dichtende Verbindung zwischen dem Tiegelrand und der Kontaktfläche und vermindert somit das unkontrollierte Eintreten des Magnesiumdampfes in den Reaktorinnenraum außerhalb des Tiegels. Zusätzlich erlaubt die Führung das reproduzierbare Zusammensetzen von Tiegel und Reaktor.

Gemäß einer Ausführungsform weist der Führungsbereich, insbesondere in einem an den Vorsprung angrenzenden Bereich, eine konische Verjüngung auf, wobei die Verjüngung bezüglich der Längsachse einen dem Vorsprung abgewandten minimalen Querschnitt und einen dem Vorsprung zugewandten maximalen Querschnittaufweist. Dabei vergrößert sich der Querschnitt in Richtung auf den Erwärmungsbereich. Die konische Verjüngung kann z.B. durch eine Verjüngung der Reaktorwandung gebildet sein.

Gemäß einer weiteren Ausführungsform weist der Reaktorinnenraum neben dem Erwärmungsbereich entlang der Längsachse weiterhin einen Kondensationsbereich zum Kondensieren des gereinigten Magnesiums auf, und die Vorrichtung ist dazu eingerichtet, den Tiegel entlang der Längsachse zwischen einer ersten Position und einer zweiten Position zu bewegen, wobei in der ersten Position des Tiegels der Tiegelinnenraum des Tiegels mit dem Reaktorinnenraum in strömungstechnischer Verbindung steht, und wobei in der zweiten Position des Tiegels der Rand des Tiegels im Wesentlichen dichtend an der Kontaktfläche des Vorsprungs anliegt, so dass nur der Erwärmungsbereich mit dem Tiegelinnenraum in strömungstechnischer Verbindung steht, wobei der Kondensationsbereich gegenüber dem Erwärmungsbereich und dem Tiegelinnenraum im Wesentlichen abgedichtet ist.

Dabei ist insbesondere der Tiegel in der ersten Position und der zweiten Position in dem Kondensationsbereich angeordnet.

Während des erfindungsgemäßen Verfahrens zur Erzeugung von gereinigtem Magnesium wird der Erwärmungsbereich auf eine erste Temperatur gebracht und der Kondensationsbereich wird auf eine zweite Temperatur gebracht, wobei die erste Temperatur höher ist als die zweite Temperatur. Dabei beträgt die erste Temperatur insbesondere 850°C bis 1100°C, bevorzugt 850°C bis 950°C, und die zweite Temperatur beträgt insbesondere 650°C bis 900°C, bevorzugt 700°C bis 850°C.

Dies hat bei geeigneten Druckverhältnissen im Reaktorinnenraum zur Folge, dass das Magnesium in dem Erwärmungsbereich zunächst schmilzt und dann von der flüssigen Phase in die gasförmige Phase übergeht und dass das auf diese Weise verdampfte Magnesium in dem Kondensationsbereich von der gasförmigen Phase in die flüssige Phase übergeht. Im Vergleich zu einem bei niedrigeren Temperaturen des Kondensationsbereiches bevorzugten Übergang des verdampften Magnesiums direkt in die feste Phase hat dies den Vorteil, dass sich keine Magnesiumkristalle bilden, wodurch es nach der Weiterverarbeitung des Magnesiums nicht zu magnesiumoxidhaltigen Einschlüssen kommt, die das Korrosionsverhalten des erhaltenen Werkstoffs verschlechtern.

Die entsprechenden Temperaturen des Erwärmungsbereichs und des Kondensationsbereiches können z.B. durch separat gesteuerte Heiz- und/ oder Kühlvorrichtungen erreicht werden, die an den entsprechenden Abschnitten des Reaktors angeordnet sind. Alternativ dazu können die entsprechenden Temperaturen z.B. auch durch eine Anordnung eines Haubenofens über dem oberen Teil des Reaktors, in dem sich der Erwärmungsbereich befindet, erreicht werden, wobei der untere Rand des Haubenofens oberhalb des Kondensationsbereiches angeordnet wird, so dass von dem Kondensationsbereich Wärme nach außen abfließen kann und sich die niedrigere zweite Temperatur in dem Kondensationsbereich einstellt.

Insbesondere weist die Vorrichtung mindestens einen weiteren Bereich auf, der bei vertikaler Positionierung der Längsachse unterhalb des Tiegels angeordnet ist, wobei der weitere Bereich während des erfindungsgemäßen Verfahrens eine dritte Temperatur aufweist, die niedriger ist als die zweite Temperatur des Kondensationsbereiches, wobei insbesondere die dritte Temperatur 250°C bis 700°C beträgt.

Dabei umfasst der weitere Bereich z.B. ein Bodenelement des Reaktors. Der weitere Bereich wird insbesondere aktiv gekühlt, um eine Beschädigung von Dichtungsringen, z.B. O-Ringen, des Bodenelements zu verhindern.

Gemäß einer weiteren Ausführungsform ist die Wandung des Reaktors bis in den weiteren Bereich verlängert.

Wenn die Längsachse vertikal verläuft, ist der Erwärmungsbereich des Reaktorinnenraums entlang der Längsachse über dem Kondensationsbereich des Reaktorinnenraums angeordnet.

Insbesondere ist der Vorsprung an dem Übergang zwischen dem Erwärmungsbereich und dem Kondensationsbereich angeordnet.

Dadurch, dass der Rand des Tiegels in der zweiten Position im Wesentlichen dichtend an der Kontaktfläche des Vorsprungs anliegt, wird vorteilhafterweise das Eintreten von Magnesiumdampf in den Tiegel umgebenden Kondensationsraum und das Kondensieren des Magnesiums außerhalb des Tiegels vermindert oder unterbunden.

Gemäß einer weiteren Ausführungsform weist die Vorrichtung eine Antriebseinrichtung, insbesondere einen Hubmotor, auf, die dazu eingerichtet ist, den Tiegel entlang der Längsachse zu bewegen, so dass der Tiegel zwischen der ersten Position und der zweiten Position bewegbar ist, wobei die Antriebseinrichtung dazu eingerichtet ist, in der zweiten Position des Tiegels eine Kraft auf den Tiegel zu übertragen, so dass der Tiegel gegen den Vorsprung gedrückt ist. Dadurch erhöht sich vorteilhafterweise die Dichtheit zwischen der Kontaktfläche und dem Tiegelrand, so dass weniger Dampf aus dem Tiegelinnenraum bzw. Erwärmungsraum austritt.

Gemäß einer weiteren Ausführungsform ist die Antriebseinrichtung dazu ausgebildet, eine Kraft auf den Tiegel auszuüben, so dass zwischen dem Rand des Tiegels und der Kontaktfläche des Vorsprungs, eine Flächenpressung von 0,1 N/mm² bis 2,0 N/mm² wirkt.

Gemäß einer weiteren Ausführungsform ist die Antriebseinrichtung dazu ausgebildet, eine Kraft auf den Tiegel auszuüben, so dass auf die Dichtung eine Flächenpressung von 0,1 N/mm² bis 0,5 N/mm² wirkt.

Gemäß einer Ausführungsform weist die Vorrichtung einen Stempel zur Positionierung und/ oder Verschiebung des Tiegels auf.

Gemäß einer weiteren Ausführungsform ist die Antriebseinrichtung, insbesondere der Hubmotor, dazu eingerichtet, den Tiegel, insbesondere mittels des Stempels, über eine Druckstange zu bewegen. Dabei ist die Antriebseinrichtung insbesondere dazu eingerichtet, in der zweiten Position des Tiegels die Kraft über die Druckstange und den Stempel auf den Tiegel zu übertragen.

Mittels der Druckstange ist eine Überbrückung größerer Wegstrecken beim Verschieben des Tiegels zwischen der ersten und der zweiten Position möglich.

Gemäß einer weiteren Ausführungsform weist die Druckstange einen metallischen oder gesinterten Werkstoff, Keramik und/ oder Grafit auf oder ist aus einen metallischen oder gesinterten Werkstoff, Keramik und/ oder Grafit gebildet.

Gemäß einer weiteren Ausführungsform ist die Oberfläche der Druckstange poliert bzw. polierfähig.

Gemäß einer weiteren Ausführungsform ist das Material der Druckstange dazu ausgebildet, bei Betriebstemperatur der Vorrichtung keine Stoffe in die Umgebung abzugeben.

Gemäß einer weiteren Ausführungsform ist das Material der Druckstange bei Betriebstemperatur der Vorrichtung chemisch inert in Bezug auf Magnesium. Das heißt, das Material der Druckstange geht bei Betriebstemperatur keine chemische Reaktion mit Magnesium ein.

Gemäß einer weiteren Ausführungsform ist die Druckstange bis zu einer Temperatur von 800°C formstabil.

Gemäß einer weiteren Ausführungsform ist die Druckstange dazu ausgebildet, entlang der Längsachse einen Weg von mindestens 2 mm, insbesondere mindestens 1mm und maximal 10 mm, insbesondere maximal 15 mm, zu überbrücken.

Gemäß einer weiteren Ausführungsform ist in Kraftübertragungsrichtung zwischen der Antriebseinrichtung und dem Tiegel wenigstens eine Federeinrichtung, insbesondere ein Federpaket, zur Übertragung der Kraft von der Antriebseinrichtung auf den Tiegel angeordnet.

Mittels der Federeinrichtung kann ein toleranzbehafteter Betrieb der Antriebseinrichtung kompensiert werden. Dies hat insbesondere den Vorteil, dass bei einer geringfügigen Überschreitung der notwendigen Kraft durch die Antriebseinrichtung keine Verformung und gegebenenfalls Beschädigung des Tiegels resultiert. Zusätzlich gleicht die Federeinrichtung thermisch bedingte Verformungen der Druckstange und/ oder des Stempels aus, so dass bei thermischer Belastung Formstabilität gewährleistet ist.

Gemäß einer weiteren Ausführungsform ist zwischen der Antriebseinrichtung und dem Tiegel eine Druckstange zur Übertragung der Kraft angeordnet, und der Reaktorinnenraum ist durch ein Bodenelement abgeschlossen, wobei das Bodenelement eine Durchgangsöffnung aufweist, die zur gasdichten Führung der Druckstange durch die Durchgangsöffnung ausgebildet ist.

Insbesondere weisen das Bodenelement und der Reaktor korrespondierende Innen- und Außengewinde auf, so dass das Bodenelement mit dem Reaktor verschraubbar ist.

Dies hat den Vorteil, dass die Druckstange mittels der Führung durch das Bodenelement zentrierbar ist, so dass der Tiegel bei dem Andrücken des Tiegelrandes an die Kontaktfläche des Vorsprungs besser zentrierbar ist. Somit kann insbesondere eine gleichmäßige Beaufschlagung der zwischen dem Rand des Tiegels und der Kontaktfläche des Vorsprungs angeordneten Dichtung erreicht werden. Weiterhin kann durch die Führung der Druckstange durch die Durchgangsöffnung die Antriebseinrichtung außerhalb des Reaktors angeordnet werden.

Gemäß einer weiteren Ausführungsform ist die Durchgangsöffnung des Bodenelements vakuumdicht gegen den Außenraum ausgebildet, wenn die Druckstange durch die Durchgangsöffnung geführt ist, z.B. mittels eines Dichtungsrings, der die Durchgangsöffnung in Umfangsrichtung umgibt.

Gemäß einer weiteren Ausführungsform ist die Verbindungsstelle der Druckstange mit dem Tiegel bzw. einem den Tiegel aufnehmenden oder stützenden Stempel als Gelenk ausgebildet, d.h. derart eingerichtet, dass eine Kippbewegung des Tiegels um die Verbindungsstelle in einem geringen Winkelbereich, insbesondere bis zu 20° möglich ist, um eine optimale Anpressung des Randes des Tiegels an die Kontaktfläche zu gewährleisten. Dies kann z.B. durch ein Spiel zwischen der Druckstange und einer zylindrischen Aufnahme am Stempel erreicht werden.

Eine weitere Ausgestaltung sieht vor, dass die Federeinrichtung zwischen der Antriebseinrichtung und der Druckstange angeordnet ist.

Weiterhin kann der obere Bereich des Bodenelementes, also der dem Reaktor zugewandte Bereich des Bodenelements, konisch ausgeführt sein, damit das Bodenelement geführt und exakt positioniert werden kann.

Gemäß einer weiteren Ausführungsform weist das Bodenelement mindestens einen in radialer und/ oder axialer Richtung dichtenden Dichtungsring auf. Ein solcher Dichtungsring dichtet das Bodenelement insbesondere gegen die Stirnfläche der Reaktorwandung ab, wenn das Bodenelement überlappend mit dieser Stirnfläche gestaltet ist, das heißt bei zylindrischer Ausführung von Reaktor und Bodenelement, wenn der Durchmesser des Bodenelements den Innendurchmesser des Reaktors überschreitet.

Geeignete Dichtungsringe halten z.B. Temperaturen von bis zu 250°C stand. Hierfür kommen z.B. Materialien wie Fluoroelastomer FKM in Frage.

Gemäß einer weiteren Ausführungsform weist der Reaktor einen Vakuumanschluss zum Anschließen einer Vakuumpumpe auf, so dass mittels der Vakuumpumpe in dem Reaktorinnenraum ein Vakuum erzeugbar ist, und die Vorrichtung ein an dem Tiegel angeordnetes erstes Thermoelement aufweist, wobei mit dem ersten Thermoelement eine Messleitung verbunden ist, und die Messleitung durch den Vakuumanschluss geführt ist.

Dabei ist der Vakuumanschluss gegen den Außenraum vakuumdicht ausgebildet, wenn die Messleitung durch den Vakuumanschluss geführt ist.

Gemäß einer weiteren Ausführungsform weist die Vorrichtung eine Vakuumpumpe auf, die mittels einer Vakuumleitung mit dem Vakuumanschluss in strömungstechnischer Verbindung steht.

Die Vakuumpumpe ist insbesondere dazu eingerichtet, im Reaktorinnenraum einen Unterdruck von 10⁻³ mbar oder weniger zu erzeugen.

Das Thermoelement weist dabei zwei Leiter aus unterschiedlichen Materialien auf, wobei eine von der Temperatur abhängige elektrische Spannung zwischen den Leitern anliegt, und wobei die Messleitung derart mit den Leitern elektrisch verbunden ist, dass durch Anschluss eines Spannungsmessgeräts an die Messleitung die zwischen den Leitern anliegende Spannung messbar ist. Somit kann über die gemessene Spannung die Temperatur an der Position der Leiter bestimmt werden.

Durch das erste Thermoelement kann vorteilhafterweise die Temperatur des Kondensationsbereiches während des Destillationsprozesses kontrolliert werden. Die Führung der Messleitung durch den Vakuumanschluss hat den Vorteil, dass keine weitere vakuumdichte Öffnung des Reaktors benötigt wird.

Ein Schutz des Thermoelements vor Magnesiumdampf, z.B. durch eine Abdichtung zwischen Tiegelrand und Kontaktfläche des Vorsprungs, ist besonders wichtig, da durch kondensiertes Magnesium die Funktionszeit des Thermoelements stark eingeschränkt werden kann.

Gemäß einer weiteren Ausführungsform weist die Vorrichtung einen Drucksensor zum Messen des in der Vakuumleitung herrschenden Drucks auf.

Gemäß einer weiteren Ausführungsform weist die Vorrichtung ein Absperrventil zum Verschließen Verbindung zwischen der Vakuumleitung und der Vakuumpumpe auf.

Gemäß einer weiteren Ausführungsform weist die Vorrichtung ein Entlüftungsventil zum Herstellen einer strömungstechnischen Verbindung zwischen der Vakuumleitung und der Umgebung des Reaktors auf.

Mittels des Drucksensors können insbesondere Rückschlüsse auf den während des Verfahrens herrschenden Druck im Reaktorinnenraum gezogen werden. Dies ist dadurch möglich, dass die Verbindung zwischen dem Tiegelinnenraum und dem restlichen Reaktorinnenraum nicht vollständig druckdicht ausgestaltet ist, sondern einen gewissen Gasaustausch zulässt. Daher korrespondieren Druckänderungen in der Vakuumleitung, die mittels des Drucksensors messbar sind, mit Änderungen des im Erwärmungsbereich und Tiegelinnenraum herrschenden Druckes.

Auf diese Weise kann mittels des Drucksensors das Ende des Destillationsprozesses detektiert werden. Dazu kann z.B. der in der Vakuumleitung anstehende Druck über den gesamten Destillationszeitraum gemessen werden. Der Druck im Reaktorinnenraum, insbesondere in dem von Erwärmungsbereich und Tiegelinnenraum gebildeten Raum, erreicht etwa nach der Hälfte der Zeit des Destillationsprozesses seinen Höhepunkt und fällt zum Ende hin leicht ab. Wenn das gesamte Magnesium verdampft und im Tiegel kondensiert ist, fällt der Druck markant zu tieferen Werten ab, z.B. auf ca. 35 mbar. Dies ist ein Signal, dass die Destillation beendet ist. Bei einer Detektion des markanten Druckabfalls mittels des Drucksensors kann insbesondere die Heizeinrichtung automatisch ausgeschaltet werden.

Gemäß einer weiteren Ausführungsform ist der Vakuumanschluss in dem Bodenelement angeordnet.

Gemäß einer weiteren Ausführungsform weist die Vorrichtung eine Kühleinrichtung, insbesondere ein Kühlrippenpaket, zur Wärmeabfuhr auf, so dass eine Dichtung des Bodenelements kühlbar ist.

Insbesondere ist die Kühleinrichtung in dem weiteren Bereich des Reaktors angeordnet, der das Bodenelement umfasst.

Dies hat den Vorteil, dass Dichtungsringe des Bodenelements durch die während des Verfahrens auftretenden Temperaturen nicht zerstört werden, wodurch die Vakuumdichtheit des Reaktors gewährleistet ist.

Gemäß einer weiteren Ausführungsform weist die Vorrichtung eine Kühleinrichtung, insbesondere ein Kühlrippenpaket, zur Wärmeabfuhr auf. Die Kühleinrichtung kann dazu ausgebildet sein, eine Dichtung des Bodenelements im weiteren Bereich des Reaktorinnenraums zu kühlen. Alternativ dazu oder zusätzlich kann die Kühleinrichtung dazu ausgebildet sein, den Tiegel zwecks Kondensation des gereinigten Magnesiums zu kühlen. Es ist jedoch auch vorgesehen, dass der Tiegel nicht mittels einer aktiven Kühlung sondern durch einen passiven Wärmeabfluss auf die gewünschte Temperatur gebracht wird. Weiterhin kann die Vorrichtung auch eine erste Kühleinrichtung und eine zweite Kühleinrichtung aufweisen, wobei die erste Kühleinrichtung zur Kühlung einer Dichtung des Bodenelements dient, und die zweite Kühleinrichtung zur Kühlung des Tiegels eingesetzt wird.

Insbesondere weist die Kühleinrichtung eine Vorrichtung zur Zwangszirkulation, z.B. ein Gebläse, auf.

Gemäß einer weiteren Ausführungsform weist die Vorrichtung eine Dichtung, insbesondere eine Flachdichtung, auf, die zwischen dem Rand des Tiegels und der Kontaktfläche des Vorsprungs angeordnet oder anordenbar ist, wobei insbesondere die dem Rand zugewandte Oberfläche und/ oder die Oberfläche des innerem Umfangs der Dichtung aus Grafit gebildet ist.

Mittels der Dichtung kann die Abdichtung zwischen dem kombinierten Erwärmungsraum/ Tiegelinnenraum und dem Kondensationsraum weiter verbessert werden. Zudem verhindert die Dichtung ein Verklemmen bzw. Verbinden von Tiegel und Reaktor und erlaubt so, dass der Tiegel zur Entnahme des gereinigten Magnesiums wieder aus dem Reaktor entnommen werden kann.

Auch bei Verwendung einer Dichtung zwischen Tiegelrand und Vorsprung wird der Tiegelinnenraum nicht vollständig vakuumdicht bzw. dampfdicht vom Rest des Reaktors abgedichtet, sondern es findet ein gewisser Gasaustausch über die im Wesentlichen dichtende Verbindung statt, allerdings ist dieser Gasaustausch geringer als ohne Verwendung einer Dichtung.

Gemäß einer weiteren Ausführungsform ist die gesamte Dichtung aus Grafit gebildet.

Die Dichtung kann zweckmäßigerweise bis 1100°C temperaturbeständig sein.

Entsprechend einer weiteren Ausgestaltung weist die Dichtung eine Oberflächenrauheit Ra von 0,05 bis 0,8 µm auf.

Da die Dichtung während des Destillationsprozesses mit Magnesiumdampf in Kontakt treten kann, ist es außerdem zweckmäßig, wenn die Dichtung chemisch inert gegenüber Magnesium ist.

Optional kann die Dichtung weiterhin eine metallische Einlage aufweisen.

Eine Ausgestaltung sieht vor, dass die Dichtung entlang der Längsachse eine Dicke von bis zu 5 mm und/ oder in radialer Richtung eine Dichtbreite von mindestens 3 mm aufweist.

Gemäß einer weiteren Ausführungsform weist die Kontaktfläche des Vorsprungs und/ oder der Rand des Tiegels eine konvexe Erhebung, insbesondere eine Wulst, auf, die an der Dichtung anliegt, wenn die Dichtung zwischen dem Rand des Tiegels und der Kontaktfläche des Vorsprungs angeordnet ist. Eine solche konvexe Erhebung kann z.B. durch einen in den Reaktor oder den Tiegel eingearbeiteten geometrischen Materialvorsprung, z.B. einen halbrunden Vorsprung, gebildet sein.

Insbesondere ist die konvexe Erhebung entlang der Längsachse erstreckt.

Die konvexe Erhebung erlaubt eine höhere Flächenpressung an der Dichtung zwischen dem Rand des Tiegels und der Kontaktfläche des Vorsprungs. Die Dichtung wird also örtlich stärker belastet und die Dichtwirkung wird erhöht, so dass weniger Dampf aus dem Tiegelinnenraum bzw. Reaktorinnenraum austritt.

Gemäß einer Ausführungsform weist der Innenraum bezüglich der Längsachse eine ausreichend große minimale Querschnittserstreckung auf, so dass der Erwärmungsraum des Reaktor von unten zugänglich ist und der Erwärmungsraum vor der Durchführung des Destillationsverfahrens manuell mit Magnesium beladen werden kann.

Gemäß einer weiteren Ausführungsform weist die Vorrichtung eine Heizeinrichtung zum Erwärmen zumindest des Erwärmungsbereichs auf, so dass in dem Erwärmungsbereich zur Verfügung gestelltes Magnesium verdampfbar ist. Dabei ist insbesondere die Heizeinrichtung als außerhalb des Reaktors angeordneter Haubenofen ausgebildet.

Insbesondere weist der Reaktor mindestens eine Abstellfläche zum Lagern der Heizvorrichtung auf.

Gemäß einer weiteren Ausführungsform weist der Tiegel eine axiale Verlängerung auf, die den Tiegelinnenraum axial über den der Abdichtung dienenden Rand des Tiegels hinaus verlängert. Dabei kann der Tiegel z.B. zweiteilig ausgeformt sein, wobei die axiale Verlängerung eines der Teile bildet.

Die besagte Verlängerung ragt bei im Wesentlichen abdichtender Position des Tiegels insbesondere in den Erwärmungsbereich hinein. Somit kann verhindert werden, dass bei Verschmutzung der Verlängerung der komplette Tiegel ersetzt werden muss. Lediglich die Ersetzung der Verlängerung ist unter Umständen notwendig. Außerdem ist durch die axiale Verlängerung gegebenenfalls eine radiale Abdichtung zwischen dem Erwärmungsbereich und dem Kondensationsbereich bzw. zwischen dem Tiegelinnenraum und dem Kondensationsbereich an dem Vorsprung möglich.

Insbesondere ist die Verlängerung mittels einer lösbaren Verbindung mit dem Tiegel verbunden.

Eine solche Verlängerung kann z.B. über eine Steckverbindung (beispielsweise eine zylindrisch oder konische Steckverbindung) in den Tiegel gesteckt sein.

Ein zweiter Aspekt der Erfindung betrifft ein Verfahren zur Erzeugung von gereinigtem Magnesium mittels einer Vorrichtung zur Erzeugung von gereinigtem Magnesium nach dem ersten Aspekt der Erfindung, wobei Magnesium in dem Erwärmungsbereich des Reaktorinnenraums zur Verfügung gestellt wird, der Tiegel in dem Reaktorinnenraum, insbesondere in dem Kondensationsbereich des Reaktorinnenraums, angeordnet wird, ein Vakuum zumindest in dem Erwärmungsbereich und insbesondere dem Kondensationsbereich des Reaktorinnenraums erzeugt wird, der Rand des Tiegels mit der Kontaktfläche des Vorsprungs im Wesentlichen dichtend in Kontakt gebracht wird, wobei insbesondere eine Kraft auf den Tiegel entlang der Längsachse erzeugt wird, so dass der Rand des Tiegels an der Kontaktfläche des Vorsprungs im Wesentlichen dichtend anliegt, und der Erwärmungsbereich des Reaktorinnenraums erwärmt wird, so dass Magnesium in dem Erwärmungsbereich verdampft wird und verdampftes gereinigtes Magnesium in dem Tiegel kondensiert wird.

Gemäß einer Ausführungsform des Verfahrens wird der Erwärmungsbereich des Reaktorinnenraums auf eine erste Temperatur, insbesondere 850°C bis 950°C, erwärmt und der Kondensationsbereich des Reaktorinnenraums wird auf eine zweite Temperatur, insbesondere 700°C bis 850°C, erwärmt, wobei die zweite Temperatur niedriger ist als die erste Temperatur.

Gemäß einer weiteren Ausführungsform des Verfahrens wird das Magnesium über den Kondensationsbereich des Reaktorinnenraums in den Erwärmungsbereich des Reaktorinnenraums eingebracht.

Gemäß einer weiteren Ausführungsform des Verfahrens wird das Magnesium in mindestens einem transportablen Behälter in dem Erwärmungsbereich des Reaktorinnenraums positioniert. Insbesondere wird das Magnesium in dem mindestens einen Behälter in den Erwärmungsbereich hinein transportiert.

Dies erlaubt eine einfache Beladung des Reaktors von unten und eine einfache Beseitigung der Rückstände des Destillationsprozesses, da diese nicht an den Reaktorwänden, sondern in den Behältern entstehen. Die Behälter können nach der Destillation aus dem Reaktor entfernt und z.B. mechanisch und/ oder maschinell gereinigt werden. Von Zeit zu Zeit kann zur Reinigung z.B. ein Strahlprozess verwendet werden.

Der besagte Behälter besteht insbesondere aus Stahl, Edelstahl oder Graphit.

Gemäß einer weiteren Ausgestaltung weist der Behälter eine dichte Schweißkonstruktion auf.

Weiterhin kann der Behälter manuell oder mit einem Werkzeug sicher im Reaktor positionierbar sein, so dass der Behälter einen sicheren Stand im Reaktor hat.

Gemäß einer weiteren Ausführungsform werden der Erwärmungsbereich und der Kondensationsbereich in einem ersten Teilschritt mittels einer Heizeinrichtung, insbesondere mittels eines über dem Erwärmungsbereich und dem Kondensationsbereich positionierten Haubenofens, erwärmt, wobei die Heizeinrichtung zu Beginn eines zweiten Teilschritts so positioniert wird, dass der Erwärmungsbereich weiter erwärmt wird, wobei der Kondensationsbereich während des zweiten Teilschritts wärmeleitend mit der Umgebung des Reaktors verbunden ist, so dass Wärme aus dem Kondensationsbereich in die Umgebung abfließen kann. Im zweiten Teilschritt bildet sich ein Gleichgewicht aus, so dass die Temperatur des Kondensationsbereiches niedriger ist als die Temperatur des Erwärmungsbereiches.

Dies kann z.B. durch Anordnen eines Haubenofens auf einem ersten Distanzhalter (z.B. einer Abstellfläche) während des ersten Teilschrittes und Anheben des Haubenofens auf einen zweiten Distanzhalter (z.B. einer Abstellfläche) zu Beginn des zweiten Teilschrittes ermöglicht werden. Alternativ kann der Haubenofen auch z.B. an einen Kran gehängt und aufgezogen werden und entsprechend über dem Reaktor positioniert werden.

Dadurch ergibt sich der Vorteil, dass die unterschiedlichen Temperaturen des Erwärmungsbereichs und des Kondensationsbereiches mit lediglich einer Heizeinrichtung realisiert werden können.

Gemäß einer weiteren Ausführungsform des Verfahrens wird ein Druck in der Vakuumleitung detektiert, wobei bei Abfallen des Drucks unter einen Grenzdruck, insbesondere 35 mbar, das Erwärmen des Erwärmungsbereiches beendet wird. Insbesondere wird auch das Erwärmen des Kondensationsbereiches bei dem Abfallen des Drucks beendet.

Der Druck in der Vakuumleitung entspricht insbesondere dem Druck in dem aus Erwärmungsbereich und Tiegelinnenraum gebildeten Raum. Bei dem Vakuumdestillationsprozess steigt der Druck zunächst aufgrund des verdampfenden Magnesiums an, erreicht etwa nach der Hälfte der Zeit des Verfahrens einen Höhepunkt und fällt dann leicht ab. Wenn das gesamte Magnesium in dem Tiegelinnenraum kondensiert ist, fällt der Druck aufgrund des fehlenden Magnesiumdampfdrucks markant ab, insbesondere auf etwa 35 mbar. Dieser Druckabfall kann als Signal für das Prozessende genutzt werden, um dann die Heizeinrichtung auszuschalten.

Im Folgenden wird die Erfindung anhand von Abbildungen und Beispielen beschrieben, aus der weitere Ausführungsformen und Vorteile abgeleitet werden können.

Dabei zeigt
- Fig. 1: eine schematische Schnittdarstellung einer erfindungsgemäßen Vorrichtung zur Erzeugung von gereinigtem Magnesium;
- Fig. 2: eine schematische Darstellung der Vakuumleitung der erfindungsgemäßen Vorrichtung mit weiteren Komponenten;
- Fig. 3: eine schematische Schnittdarstellung eines Details der erfindungsgemäßen Vorrichtung;
- Fig. 4: eine schematische Schnittdarstellung einer erfindungsgemäßen Vorrichtung zur Erzeugung von gereinigtem Magnesium, wobei sich der Tiegel in der ersten Position befindet;
- Fig. 5: eine weitere schematische Schnittdarstellung der in Fig. 4 gezeigten Vorrichtung, wobei sich der Tiegel in der zweiten Position befindet;
- Fig. 6: eine weitere schematische Schnittdarstellung der in Fig. 4 und 5 gezeigten Vorrichtung nach Ende des Destillationsprozesses.

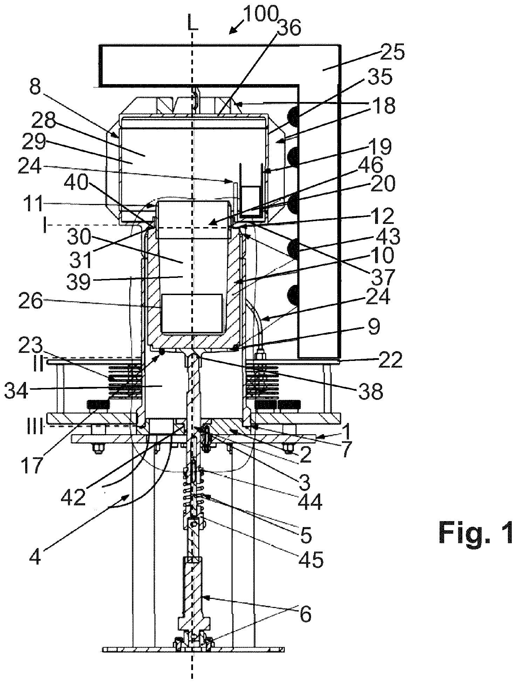

Die Figur 1 zeigt eine schematische Schnittdarstellung einer Vorrichtung 100 zur Erzeugung von gereinigtem Magnesium 26 mit einem Reaktor 8, der entlang einer Längsachse L erstreckt ist. Der Reaktor 8 ist auf einem Sockel 1 positioniert, wobei auf den Sockel 1 ein Bodenelement 2 des Reaktors 8 geschraubt ist, das den Reaktor 8 nach unten abschließt.

Der Reaktor 8 bildet einen Reaktorinnenraum 28, der einen oberhalb einer gedachten ersten Schnittlinie I angeordneten Erwärmungsbereich 29, einen unterhalb der ersten Schnittlinie I zwischen der ersten Schnittlinie I und einer zweiten Schnittlinie II angeordneten Kondensationsbereich 30 und einen unterhalb der zweiten Schnittlinie II zwischen der zweiten Schnittlinie II und einer dritten Schnittlinie III angeordneten weiteren Bereich 34 aufweist. Die Schnittlinien I, II, III verlaufen jeweils entlang einer Querschnittsebene, die senkrecht zur Längsachse L verläuft.

Der Reaktor 8 hat in der in Figur 1 dargestellten Ausführungsform eine zylindrische Form, wobei der Erwärmungsbereich 29 im Querschnitt einen größeren Durchmesser hat als der Kondensationsbereich 30 und der weitere Bereich 34. Andere Geometrien sind ebenfalls möglich. Im Erwärmungsbereich 29 ist der Reaktor 8 durch einen Deckel 36 geschlossen, der insbesondere an eine Mantelfläche 35 des Reaktors 8 angeschweißt ist. Auf der Mantelfläche 35 und dem Deckel 36 sind Rippen 18 zur Vermeidung von spannungsbedingten Verformungen, hervorgerufen durch Druck- bzw. Temperaturänderungen.

Der Erwärmungsbereich 29 weist in radialer Richtung einen Boden 37 auf, der ringförmig umlaufend ausgebildet ist. Der innere Umfang des ringförmigen Bodens 37 weist eine Öffnung 46 auf, die mit dem Kondensationsbereich 30 verbunden ist. Wie in Figur 1 gezeigt können auf dem Boden 37 Behälter 19 zur Aufnahme von zu reinigendem Magnesium 20 positioniert werden. Optional kann an dem inneren Umfang des Bodens 37 eine umlaufende Kante angeordnet sein, um zu verhindern, dass die Behälter 19 z.B. beim Beladen des Reaktors 8 durch die Öffnung 46 fallen. Im Erwärmungsbereich 29 des Reaktorinnenraums 28 ist ein zweites Thermoelement 24 zur Ermittlung der Temperatur des Erwärmungsbereiches 29 positioniert.

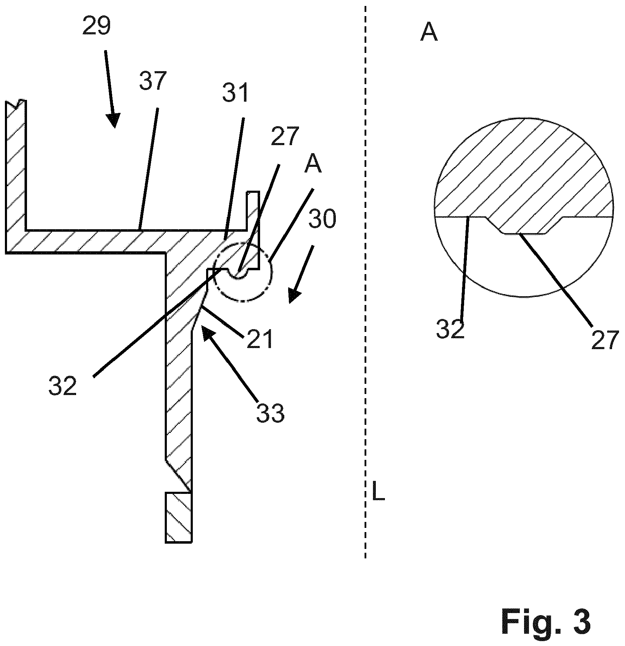

Der Kondensationsbereich 30 ist durch einen radial angeordneten umlaufenden Vorsprung 31 (siehe auch Detailansicht in Fig. 3) von dem Erwärmungsbereich 29 getrennt. In dem Kondensationsbereich 30 ist ein topfartiger Tiegel 10 mit einem Tiegelinnenraum 39 zur Aufnahme des bei dem Destillationsprozess gebildeten kondensierten gereinigten Magnesiums 26 angeordnet. Der Tiegel 10 weist einen Rand 40 auf, der den Tiegelinnenraum 39 begrenzt. An der Stirnseite des Tiegels 10 ist eine in radialer Richtung umlaufende Dichtung 12, insbesondere Flachdichtung, angeordnet.

Der Rand 40 steht in der in Fig. 1 gezeigten Konfiguration über die Dichtung 12 in Kontakt mit einer Kontaktfläche 32 des Vorsprungs 31 (siehe auch Fig. 3), wobei der Rand 40, die Dichtung 12 und die Kontaktfläche 32 eine im Wesentlichen dichtende Verbindung zwischen dem Erwärmungsbereich 29 und dem Tiegelinnenraum 39 ausbilden, so dass der außerhalb des Tiegels 10 liegende Kondensationsbereich 30 von dem Erwärmungsbereich 29 und dem Tiegelinnenraum 39 im Wesentlichen dichtend abgeschlossen ist. Dadurch kann verhindert werden, dass während des Destillationsprozesses verdampftes Magnesium in den Zwischenraum zwischen dem Tiegel 10 und der den Tiegel 10 umgebenden Wandung des Kondensationsbereichs 30 eindringt und dort kondensieren kann.

Der Tiegel 10 weist weiterhin im oberen Bereich eine axiale Verlängerung 11 (Tiegelaufsatz) auf, welche den Tiegel 10 verlängert und weiter in den Erwärmungsbereich 29 ragt. Die axiale Verlängerung 11 lässt sich bei einer Verschmutzung oder Beschädigung durch das in dem Reaktorinnenraum 28 befindliche verdampfte Magnesium leicht austauschen und bewirkt außerdem eine zusätzliche Abdichtung neben der im Wesentlichen dichtenden Verbindung zwischen dem Rand 40 des Tiegels, der Dichtung 12 und der Kontaktfläche 32 des Vorsprungs 31.

Der Tiegel 10 ist auf einem Stempel 9 gelagert, der im weiteren Bereich 34 des Reaktors 8 über eine gelenkartige Verbindungsstelle 38 mit einer Druckstange 3 verbunden ist, wobei die Druckstange 3 über eine erste Verbindung 44 mit einer Federeinrichtung 5, insbesondere einem Federpaket, verbunden ist, und wobei die Federeinrichtung 5 über eine zweite Verbindung 45 mit einer Antriebseinrichtung 6, insbesondere einem Hubmotor, verbunden ist.

Die Antriebseinrichtung 6 ist dazu ausgebildet, den Tiegel 10 entlang der Längsachse L zu verfahren, und in der in Fig. 1 gezeigten Konfiguration, in der der Rand 40 des Tiegels 10 an dem Vorsprung 31 anliegt, entlang der Längsachse L eine Kraft über die Federeinrichtung 5, die Druckstange 3 und den Stempel 9 auf den Tiegel 10 zu übertragen, so dass der Tiegel 10 mit seinem Rand 40 an die an der Kontaktfläche 32 anliegende Dichtung 12 gedrückt wird, wodurch eine im Wesentlichen dichtende Verbindung zwischen dem Rand 40, der Dichtung 12 und der Kontaktfläche 32 erreicht wird. Die gelenkartige Verbindungsstelle 38 dient dabei zur axialen Ausrichtung des Tiegels 10 zum Reaktor 8 zum Ausgleich einer unbeabsichtigten Kippstellung des Tiegels 10 an der gelenkartigen Verbindungsstelle 38.

Das Bodenelement 2, welches den weiteren Bereich 34 des Reaktors 8 nach unten hin abschließt, weist eine zentral angeordnete Durchgangsöffnung 42 auf, durch welche die Druckstange 3 geführt ist. Insbesondere dadurch, dass die Wandung des Reaktors 8 um den weiteren Bereich 34 nach unten bis zu dem Bodenelement 2 verlängert ist, führt dies zu einer zusätzlichen Zentrierung und Stabilisierung der Führung der Druckstange 3 und somit zu einer besseren Dichtheit der Verbindung zwischen Rand 40 des Tiegels, Dichtung 12 und Kontaktfläche 32 des Vorsprungs 31.

Der Reaktor 8 kann insbesondere durch Entfernen des Bodenelements 2 an seiner Unterseite geöffnet werden. Dadurch kann der Reaktor 8 manuell befüllt und gereinigt werden. Somit können insbesondere im Erwärmungsbereich 29 mit Magnesium 20 gefüllte Behälter 19, z.B. offene Metallbehälter, platziert werden. Die optionale umlaufende Kante des Bodens 37 führt zu einem sicheren Stand der Behälter 19 und verhindert das Herabfallen der Behälter 19.

Weiterhin weist das Bodenelement 2 einen Vakuumanschluss 4 zum Anschließen einer Vakuumpumpe 13 auf. Das Bodenelement 2 weist im äußeren Bereich radial und/oder axial angeordnete Dichtungsringe 7 zum Abdichten gegenüber dem Reaktor 8 auf. Die Durchgangsöffnung 42, durch die die Druckstange 3 geführt ist, ist ebenfalls abgedichtet, z.B. mittels eines weiteren Dichtungsrings. Somit kann der Reaktorinnenraum 28 durch den in dem Bodenelement 2 angeordneten Vakuumanschluss 4 zumindest teilweise evakuiert werden. Eine Messleitung 41 eines ersten Thermoelementes 17 zur Messung der Tiegelbodentemperatur ist ebenfalls durch den Vakuumanschluss 4 geführt.

Über den Reaktor ist eine Heizeinrichtung 25, insbesondere ein Haubenofen, mit Heizwendeln 43, so gestülpt, dass dieser auf einer Abstellfläche 22 des Reaktors 8 etwa auf Höhe des Stempels vollständig aufliegt.

Außerhalb des weiteren Bereichs 34 ist eine Kühleinrichtung 23, z.B. ein Paket aus Rippen, zur thermischen Kühlung des Reaktors 8 angeordnet. Die Kühlung kann z.B. durch Konvektion oder mit zwangsweiser Luftumwälzung (Anblasen mit Ventilator) erfolgen.

Nach dem Beladen wird der Reaktor 8 insbesondere über den Grundaufbau der Anlage gehoben, über das Bodenelement 2 abgesenkt und vakuumtechnisch gedichtet. Die Konstruktion ist dabei so ausgeführt, dass in dieser Position zwischen Dichtung 12 bzw. Rand 40 des Tiegels 10 und der Kontaktfläche 32 des Vorsprungs 31 des Reaktors 8 ein Spalt besteht, damit im gesamten Reaktorinnenraum 28 ein Vakuum gezogen werden kann.

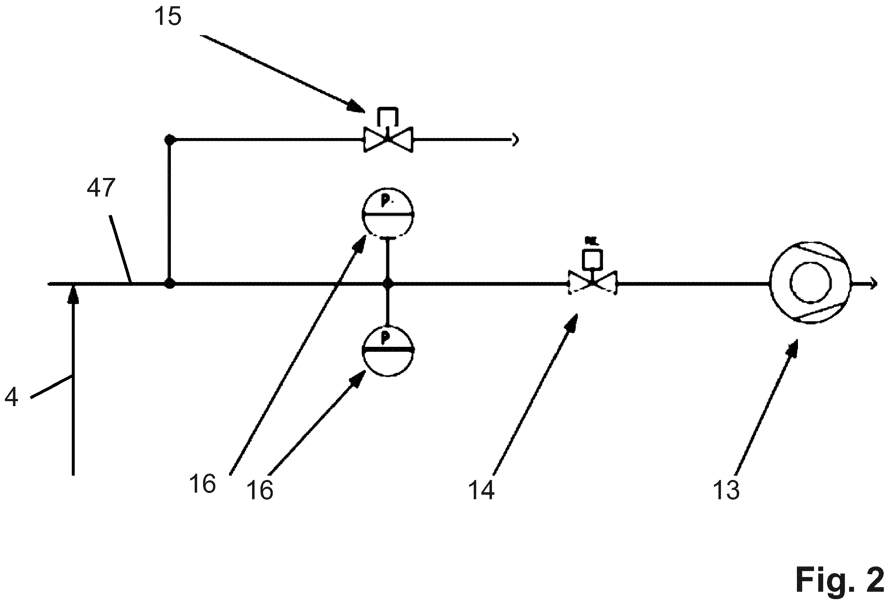

Die Figur 2 zeigt eine schematische Detailansicht einer Vakuumleitung 47, die mit dem in Figur 1 gezeigten Vakuumanschluss 4 der Vorrichtung 100 zur Erzeugung von gereinigtem Magnesium und mit einer Vakuumpumpe 13 verbunden ist. Zwischen dem Vakuumanschluss 4 und der Vakuumpumpe 13 sind ein Absperrventil 14 zum Verschließen der Vakuumleitung 47, ein Entlüftungsventil 15 zum strömungstechnischen Verbinden der Vakuumleitung 47 mit der Umgebung und ein Drucksensor 16 zum Messen des in der Vakuumleitung 47 herrschenden Druckes angeordnet.

Mittels des Drucksensors 16 können Rückschlüsse auf den während des Verfahrens herrschenden Druck im Reaktorinnenraum 28 gezogen werden.

Auf diese Weise kann mittels des Drucksensors 16 das Ende des Destillationsprozesses detektiert werden. Dazu kann z.B. der in der Vakuumleitung 47 anstehende Druck über den gesamten Destillationszeitraum gemessen werden. Der Druck im Reaktorinnenraum 28, insbesondere in dem von Erwärmungsbereich 29 und Tiegelinnenraum 39 gebildeten Raum, erreicht etwa nach der Hälfte der Zeit des Destillationsprozesses seinen Höhepunkt und fällt zum Ende hin leicht ab. Wenn das gesamte Magnesium verdampft und im Tiegel 10 kondensiert ist, fällt der Druck markant zu tieferen Werten ab, z.B. auf ca. 35 mbar. Dies ist ein Signal, dass die Destillation beendet ist. Bei einer Detektion des markanten Druckabfalls mittels des Drucksensors 16 kann insbesondere die Heizeinrichtung 25 automatisch ausgeschaltet werden.

Die Figur 3 zeigt eine schematische Ansicht eines Teils der Reaktorwandung der erfindungsgemäßen Vorrichtung 100 zur Erzeugung von gereinigtem Magnesium im Querschnitt. Im oberen Teil der Figur 3 ist ein Teil des ringförmigen Außenabschnitts des Erwärmungsraumes 29 des Reaktors 8 abgebildet, der an dem bezüglich der Längsachse L radialen Vorsprung 31 in den Kondensationsraum 30 des Reaktors 8 übergeht. Der Vorsprung weist eine ebenfalls radial ausgerichtete Kontaktfläche 32 mit einer in axialer Richtung erstreckten konvexen Erhebung 27 auf. Die Einzelheit A zeigt eine vergrößerte Detailansicht des in der Figur 3 markierten Ausschnitts A der Kontaktfläche 32 mit der konvexen Erhebung 27. Weiterhin ist in Figur 3 ein Führungsbereich 33 der Reaktorwandung mit einer konisch ausgebildeten Führung 21 gezeigt.

Wenn der Tiegel 10 in den Kondensationsraum 30 des Reaktors 8 eingebracht wird, wird der Tiegel 10 durch die Führung 22 zentriert und geführt und tritt mit seinem Rand 40, gegebenenfalls über die Dichtung 12 in Kontakt mit der Kontaktfläche 32 des Vorsprungs 31 (siehe auch Figur 1). Durch die konvexe Erhebung 27 wird dabei die Flächenpressung auf den Rand 40 des Tiegels 10 bzw. die Flachdichtung 12 erhöht, was die Dichtwirkung verbessert.

Im Folgenden wird ein beispielhafter Ablauf des erfindungsgemäßen Verfahrens zur Erzeugung von gereinigtem Magnesium mit Bezug auf die Figuren 1 bis 6 dargestellt.

In einer Aufheizphase wird zuerst der Reaktor mittels der Vakuumpumpe 13 evakuiert. Nach Erreichen des Zieldrucks (z.B. 1x10⁻³ mbar) wird die Heizeinrichtung 25, z.B. der Haubenofen, eingeschaltet, die Vakuumpumpe 13 läuft weiter. Durch das Aufheizen wird die Innenoberfläche des Reaktors 8 von sorbierten Gasen gereinigt. Auch der Tiegel 10 und das das Material der Dichtung 12 gasen aus und werden so gereinigt.

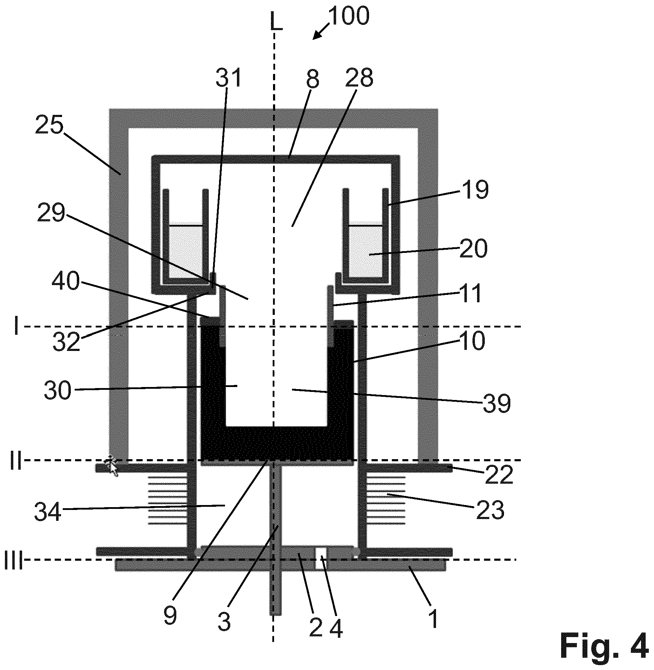

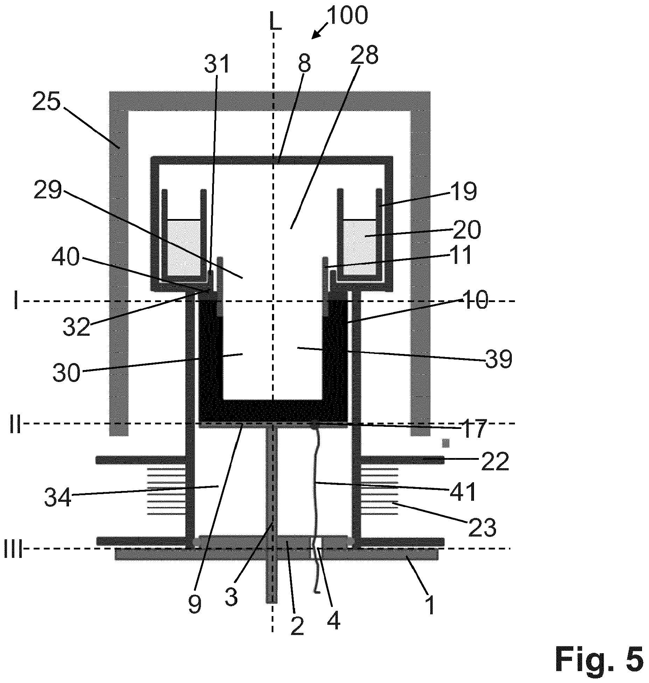

Die Aufheizphase ist abgeschlossen, wenn die Zwischentemperatur im Erwärmungsbereich 29 des Reaktors 8 die Solltemperatur erreicht hat (z.B. 350°C), die Tiegelbodentemperatur ihren Zielwert erreicht hat (z.B. >250°C) und der Zieldruck erreicht ist (z.B. 1x10⁻³ mbar). Wenn alle Zielgrößen erreicht sind, wird der Reaktor 8 geschlossen. Hierzu drückt die Antriebseinrichtung 6 die Druckstange 3 mit dem Tiegel 10 von der ersten Position (siehe Figur 4) nach oben in die zweite Position (siehe Figur 5). Wenn die Stromaufnahme der Antriebseinrichtung 6 ihren Zielwert erreicht hat, wird die Antriebseinrichtung 6 ausgeschaltet. Die darüber liegende Federeinrichtung 5 ist in diesem Zustand gespannt und übt einen konstanten Druck nach oben auf den Tiegel 10 aus. Während der Tiegel 10 hochfährt, wird dieser durch eine konische Führung 21 (siehe Figur 3) geführt und in eine sichere Position gebracht. Durch die gelenkartige Verbindungsstelle 38 wird sichergestellt, dass die Dichtung 12 zwischen Tiegel 10 und Reaktor 8 gleichmäßig in der Zirkumferenz belastet wird. Um örtlich die spezifische Flächenpressung der Dichtung 12 weiter zu erhöhen, ist an der Kontaktfläche 32 eine konvexe Erhebung 27 angeordnet.

Nach dem Hochfahren des Tiegels 10 (bzw. Schließen des Reaktors 8) wird über das Absperrventil 14 die Vakuumleitung 47 zur Vakuumpumpe 13 (siehe Figur 2) geschlossen und anschließend die Vakuumpumpe 13 (für die gesamte Destillationsdauer) ausgeschaltet. Es erfolgt ein weiteres Aufheizen des Reaktors 8 auf Destillationstemperatur (z.B. 900°C).

Das Einstellen des Temperaturgradienten erfolgt, wenn die Bodentemperatur des Tiegels 10, gemessen mittels des ersten Thermoelements 17, die Zieltemperatur (z.B. 700°C) erreicht hat. Zu diesem Zeitpunkt hat die Anlage im Erwärmungsbereich 29 die Zieltemperatur (z.B. 900°C) bereits erreicht. Die Heizeinrichtung 25, insbesondere der Haubenofen, wird angehoben und auf drei heruntergeschobene Blöcke gestellt. Durch das Anheben der Heizeinrichtung 25 geht Wärme verloren und es stellt sich ein Gleichgewicht ein. Die Höhe der Blöcke wurde experimentell so gewählt, dass die Tiegeltemperatur auf z.B. 700°C gehalten werden kann.

Nach dem Abschalten der Vakuumpumpe 13 und dem weiteren Aufheizen des Reaktors 8 steigt der Druck im Reaktor 8 an. Beobachtet werden kann dieses Verhalten am Drucksensor 16 der Vakuumleitung 47. Entlang der Siedepunktkurve stellt sich in Abhängigkeit der Temperatur ein Magnesium-Dampfdruck ein. Experimentell wurden Drücke in der Vakuumleitung 47 -bei z.B. 900°C- von 70-90 mbar gemessen. Gemäß Dampfdruckkurve sollte ein Druck von ca. 110 mbar im Inneren herrschen. Der gemessene Druck bleibt praktisch über den gesamten Destillationszeitraum unverändert.

Die Magnesiumdestillation ist praktisch ein stationärer Zustand, bei dem Magnesium 20 gemäß seiner Siedepunktkurve in die Dampfphase übergeht und gereinigtes Magnesium 26 an den Wänden des Tiegels 10 kondensiert und aufgefangen wird. Durch die Kondensation wird gasförmiges Magnesium aus dem Gleichgewicht entfernt, so dass neues Magnesium verdampfen kann.

Die Abscheidung von Magnesium beträgt bei einem Reaktor mit einer Kapazität von 3 kg Ausgangs-Magnesium rund 200 ±50 Gramm pro Stunde. Durch die Kondensation wird Kondensationswärme frei und über die Zeit steigt die Tiegelbodentemperatur leicht an. In der Regel konnten maximale Temperaturen bis ca. 735°C beobachtet werden. Nach dem Maximum fällt die Temperatur wieder leicht ab und das Ende der Destillation naht. Beim Destillationsende, wenn alles Magnesium verdampft und wieder kondensiert ist, hat der Tiegel 10 wieder eine Temperatur von ca. 700°C.

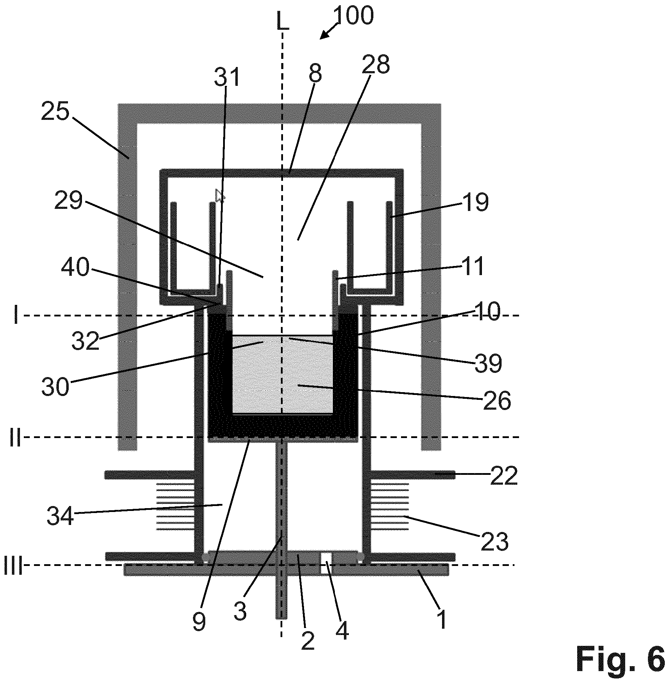

Das Destillationsende (siehe Figur 6) kann z.B. anhand der Temperaturerhöhung im Erwärmungsbereich 29 des Reaktors 8 detektiert werden. Bedingt durch fehlendes Magnesium (und damit auch nicht mehr benötigte Verdampfungsenergie) steigt die Temperatur um ca. +6 bis +10°C, gemessen an dem zweiten Thermoelement 24 (siehe Figur 1).

Alternativ dazu kann das Destillationsende auch durch Messung des Druckabfalls detektiert werden. Der in der Vakuumleitung 47 anstehende Druck wird über den gesamten Destillationszeitraum gemessen. Der Druck erreicht ca. Mitte der Destillation seinen Höhepunkt und fällt zum Ende hin leicht ab. Wenn das gesamte Magnesium 20 verdampft und im Tiegel 10 kondensiert ist, fällt der Druck markant zu tieferen Werten, z.B. ca. 35 mbar, ab. Dies ist ein Signal dafür, dass die Destillation beendet ist und die Anlage kann infolgedessen automatisch abgeschaltet werden.

Nach Beendigung der Destillation befindet sich hochreines Magnesium als Kondensat 26 im Tiegel 10.

**Bezugszeichenliste**

| | |
|---|---|
| 1 | Sockel |
| 2 | Bodenelement |
| 3 | Druckstange |
| 4 | Vakuumanschluss |
| 5 | Federeinrichtung, insbesondere Federpaket |
| 6 | Antriebseinrichtung, insbesondere Hubmotor |
| 7 | Dichtungsring, insbesondere O-Ring |
| 8 | Reaktor |
| 9 | Stempel |
| 10 | Tiegel |
| 11 | Axiale Verlängerung |
| 12 | Dichtung, insbesondere Flachdichtung |
| 13 | Vakuumpumpe |
| 14 | Absperrventil |
| 15 | Entlüftungsventil |
| 16 | Drucksensor |
| 17 | Erstes Thermoelement |
| 18 | Rippen |
| 19 | Behälter |
| 20 | Magnesium |
| 21 | Führung |
| 22 | Abstellfläche |
| 23 | Kühleinrichtung |
| 24 | Zweites Thermoelement |
| 25 | Heizeinrichtung, insbesondere Haubenofen |
| 26 | Gereinigtes Magnesium |
| 27 | Konvexe Erhebung |
| 28 | Reaktorinnenraum |
| 29 | Erwärmungsbereich |
| 30 | Kondensationsbereich |
| 31 | Vorsprung |
| 32 | Kontaktfläche |
| 33 | Führungsbereich |
| 34 | Weiterer Bereich |
| 35 | Mantelfläche |
| 36 | Deckel |
| 37 | Boden |
| 38 | Gelenkartige Verbindungsstelle |
| 39 | Tiegelinnenraum |
| 40 | Rand |
| 41 | Messleitung |
| 42 | Durchgangsöffnung |
| 43 | Heizwendel |
| 44 | Erste Verbindung |
| 45 | Zweite Verbindung |
| 46 | Öffnung |
| 47 | Vakuumleitung |
| 100 | Vorrichtung zur Erzeugung von gereinigtem Magnesium |
| I | Erste Schnittlinie |
| II | Zweite Schnittlinie |
| III | Dritte Schnittlinie |
| L | Längsachse |

## Patentansprüche

1. Vorrichtung (100) zur Erzeugung von gereinigtem, insbesondere hochreinem, Magnesium (26), aufweisend
- einen Reaktor (8) zur Vakuumdestillation, der entlang einer Längsachse (L) erstreckt ist, wobei der Reaktor (8) einen Reaktorinnenraum (28) mit einem Erwärmungsbereich (29) zum Erwärmen von in dem Erwärmungsbereich (29) zur Verfügung gestelltem Magnesium (20) bildet,
- einen Tiegel (10), der einen Tiegelinnenraum (39) zur Aufnahme von mittels der Vorrichtung (100) verdampftem und anschließend kondensiertem gereinigtem Magnesium (26) bildet,
**dadurch gekennzeichnet, dass** der Reaktor (8) an dem Erwärmungsbereich (29) einen in Bezug zur Längsachse (L) radial umlaufenden Vorsprung (31) aufweist, wobei eine im Wesentlichen quer zur Längsachse (L) erstreckte Kontaktfläche (32) des Vorsprungs (31) dazu ausgebildet ist, mit einem den Tiegelinnenraum (39) begrenzenden Rand (40) des Tiegels (10) eine im Wesentlichen dichtende Verbindung zu bilden.

2. Vorrichtung (100) zur Erzeugung von gereinigtem Magnesium (26) nach Anspruch 1, **dadurch gekennzeichnet, dass** die Vorrichtung eine konisch ausgestaltete Führung (21) zur Zentrierung des Tiegels (10) in Bezug zur Längsachse (L) aufweist, wobei die Führung (21) an einem Rand (40) des Tiegels (10) und/ oder in einem einen Rand (40) des Tiegels (10) zumindest teilweise umgebenden Führungsbereich (33) des Reaktors (8) ausgebildet ist.

3. Vorrichtung (100) zur Erzeugung von gereinigtem Magnesium (26) nach Anspruch 1 oder 2, **dadurch gekennzeichnet, dass** der Reaktorinnenraum (28) neben dem Erwärmungsbereich (29) entlang der Längsachse (L) weiterhin einen Kondensationsbereich (30) zum Kondensieren des gereinigten Magnesiums (26) aufweist, und die Vorrichtung (100) dazu eingerichtet ist, den Tiegel (10) entlang der Längsachse (L) zwischen einer ersten Position und einer zweiten Position zu bewegen, wobei in der ersten Position des Tiegels (10) der Tiegelinnenraum (39) des Tiegels (10) mit dem Reaktorinnenraum (28) in strömungstechnischer Verbindung steht, und wobei in der zweiten Position des Tiegels (10) der Rand (40) des Tiegels (10) im Wesentlichen dichtend an der Kontaktfläche (32) des Vorsprungs (31) anliegt, so dass der Erwärmungsbereich (29) mit dem Tiegelinnenraum (39) in strömungstechnischer Verbindung steht, wobei der Kondensationsbereich (30) gegenüber dem Erwärmungsbereich (29) und dem Tiegelinnenraum (39) im Wesentlichen abgedichtet ist.

4. Vorrichtung (100) zur Erzeugung von gereinigtem Magnesium (26) nach Anspruch 3, **dadurch gekennzeichnet, dass** die Vorrichtung (100) eine Antriebseinrichtung (6), insbesondere einen Hubmotor, aufweist, die dazu eingerichtet ist, den Tiegel (10) entlang der Längsachse (L) zu bewegen, so dass der Tiegel (10) zwischen der ersten Position und der zweiten Position bewegbar ist, wobei die Antriebseinrichtung (6) dazu eingerichtet ist, in der zweiten Position des Tiegels (10) eine Kraft auf den Tiegel (10) zu übertragen, so dass der Tiegel (10) gegen den Vorsprung (31) gedrückt ist.

5. Vorrichtung (100) zur Erzeugung von gereinigtem Magnesium (26) nach Anspruch 4, **dadurch gekennzeichnet, dass** zwischen der Antriebseinrichtung (6) und dem Tiegel (10) eine Druckstange (3) zur Übertragung der Kraft angeordnet ist, und dass der Reaktorinnenraum (29) durch ein Bodenelement (2) abgeschlossen ist, wobei das Bodenelement (2) eine Durchgangsöffnung (42) aufweist, die zur Führung der Druckstange (3) durch die Durchgangsöffnung (42) ausgebildet ist.

6. Vorrichtung (100) zur Erzeugung von gereinigtem Magnesium (26) nach mindestens einem der vorhergehenden Ansprüche, **dadurch gekennzeichnet, dass** der Reaktor (8) einen Vakuumanschluss (4) zum Anschließen einer Vakuumpumpe (13) aufweist, so dass mittels der Vakuumpumpe (13) in dem Reaktorinnenraum (28) ein Vakuum erzeugbar ist, und die Vorrichtung (100) ein an dem Tiegel (10) angeordnetes erstes Thermoelement (17) aufweist, wobei mit dem ersten Thermoelement (17) eine Messleitung (41) verbunden ist, und die Messleitung (41) durch den Vakuumanschluss (4) geführt ist.

7. Vorrichtung (100) zur Erzeugung von gereinigtem Magnesium (26) nach mindestens einem der vorhergehenden Ansprüche, **dadurch gekennzeichnet, dass** die Vorrichtung (100) eine Kühleinrichtung (23) zur Wärmeabfuhr aufweist.

8. Vorrichtung (100) zur Erzeugung von gereinigtem Magnesium (26) nach mindestens einem der vorhergehenden Ansprüche, **dadurch gekennzeichnet, dass** die Vorrichtung (100) eine Dichtung (12) aufweist, die zwischen dem Rand (40) des Tiegels (10) und der Kontaktfläche (32) des Vorsprungs (31) angeordnet oder anordenbar ist, wobei insbesondere die dem Rand (40) zugewandte Oberfläche und/ oder die Oberfläche des innerem Umfangs der Dichtung (12) aus Grafit gebildet ist.

9. Vorrichtung (100) zur Erzeugung von gereinigtem Magnesium (26) nach Anspruch 8, **dadurch gekennzeichnet, dass** die Kontaktfläche (32) des Vorsprungs (31) und/ oder der Rand (40) des Tiegels (10) eine konvexe Erhebung (27) aufweist, die an der Dichtung (12) anliegt, wenn die Dichtung (12) zwischen dem Rand (40) des Tiegels (10) und der Kontaktfläche (32) des Vorsprungs (31) angeordnet ist.

10. Vorrichtung (100) zur Erzeugung von gereinigtem Magnesium (26) nach mindestens einem der vorhergehenden Ansprüche, **dadurch gekennzeichnet, dass** die Vorrichtung (100) eine Heizeinrichtung (25) zum Erwärmen zumindest des Erwärmungsbereichs (29) aufweist, so dass in dem Erwärmungsbereich (29) zur Verfügung gestelltes Magnesium (20) verdampfbar ist, wobei die Heizeinrichtung (25) als außerhalb des Reaktors (8) angeordneter Haubenofen ausgebildet ist.

11. Vorrichtung (100) zur Erzeugung von gereinigtem Magnesium (26) nach mindestens einem der vorhergehenden Ansprüche, **dadurch gekennzeichnet, dass** der Tiegel (10) eine axiale Verlängerung (11) aufweist, die den Tiegelinnenraum (39) axial über den der Abdichtung dienenden Rand (40) des Tiegels (10) hinaus verlängert.

12. Verfahren zur Erzeugung von gereinigtem, insbesondere hochreinem, Magnesium (26) mittels einer Vorrichtung (100) zur Erzeugung von gereinigtem Magnesium (26) nach mindestens einem der Ansprüche 1 bis 11, wobei
- Magnesium (20) in dem Erwärmungsbereich (29) des Reaktorinnenraums (28) zur Verfügung gestellt wird,
- der Tiegel (10) in dem Reaktorinnenraum (28) angeordnet wird,
- ein Vakuum zumindest in dem Erwärmungsbereich (29) des Reaktorinnenraums (28) erzeugt wird,
- der Rand (40) des Tiegels (10) mit der Kontaktfläche (32) des Vorsprungs (31) dichtend in Kontakt gebracht wird,
- der Erwärmungsbereich (29) des Reaktorinnenraums (28) erwärmt wird,
so dass Magnesium (20) in dem Erwärmungsbereich (29) verdampft wird und verdampftes gereinigtes Magnesium (26) in dem Tiegel (10) kondensiert wird.

13. Verfahren nach Anspruch 12, wobei das Magnesium (20) über den Kondensationsbereich (30) des Reaktorinnenraums (28) in den Erwärmungsbereich (29) des Reaktorinnenraums (28) eingebracht wird.

14. Verfahren nach Anspruch 12 oder 13, wobei das Magnesium (20) in mindestens einem transportablen Behälter (19) in dem Erwärmungsbereich (29) des Reaktorinnenraums (28) positioniert wird.

15. Verfahren nach mindestens einem der Ansprüche 12 bis 14, wobei ein Druck in der Vakuumleitung (4) detektiert wird, und wobei bei Abfallen des Drucks unter einen Grenzdruck, insbesondere 35 mbar, das Erwärmen des Erwärmungsbereiches (29) beendet wird.
